# EUROPÄISCHE PATENTSCHRIFT

(11) **EP 2 285 485 B1**
(45) Veröffentlichungstag und Bekanntmachung des Hinweises auf die Patenterteilung: **23.04.2014**
(21) Anmeldenummer: 09753608.0
(22) Anmeldetag: 05.05.2009
(51) Int. Cl.: B01J 20/285, B01J 20/32, C08F 4/52, C08F 257/02, C08F 265/00, C08F 271/00, C08F 271/02, C08F 283/06, C08F 290/06, C08F 291/00, C08L 51/00

(54) **CE(IV) INITIIERTE PFROPFPOLYMERISATION AUF NICHT HYDROXYLGRUPPENHALTIGEN POLYMEREN**
CE(IV)-INITIATED GRAFT POLYMERIZATION ON POLYMERS NOT CONTAINING HYDROXYL GROUPS
POLYMÉRISATION-GREFFAGE INITIÉE PAR CE(IV) SUR DES POLYMÈRES NE CONTENANT PAS DE GROUPES HYDROXYLE

(30) Priorität: 30.05.2008 EP 08009923
(43) Veröffentlichungstag der Anmeldung: 23.02.2011
(73) Patentinhaber: Merck Patent GmbH, 64293 Darmstadt (DE)
(72) Erfinder: JOEHNCK, Matthias, 64287 Darmstadt (DE)
(86) Internationale Anmeldenummer: PCT/EP2009/003195
(87) Internationale Veröffentlichungsnummer: WO 2009/143953

(56) Entgegenhaltungen:
- EP-A- 0 534 016
- EP-A- 1 829 611
- US-A1- 2005 065 282
- VIKLUND C ET AL: "Preparation of porous poly(styrene-co-divinylbenzene) monoliths with controlled pore size distributions initiated by stable free radicals and their pore surface functionalization by grafting" 1. Januar 2001 (2001-01-01), MACROMOLECULES, ACS, WASHINGTON, DC, US, PAGE(S) 4361 - 4369 , XP002960912 ISSN: 0024-9297 das ganze Dokument
- DU ET AL: "Fabrication of high-permeability and high-capacity monolith for protein chromatography" 16. August 2007 (2007-08-16), JOURNAL OF CHROMATOGRAPHY, ELSEVIER SCIENCE PUBLISHERS B.V. AMSTERDAM, NL, PAGE(S) 212 - 218 , XP022202208 ISSN: 0021-9673 das ganze Dokument

## Beschreibung

Die Erfindung betrifft ein Verfahren zur Herstellung eines neuen Trennmaterials, sowie hergestellte Trennmaterialien und deren Anwendung zur Abtrennung von geladenen Biopolymeren aus Flüssigkeiten.

### Stand der Technik

Für die Isolierung von Biopolymeren aus Flüssigkeiten ist die Chromatographie eine der am besten geeigneten Methoden. Insbesondere polymer basierte Chromatographiematerialien sind in der Aufreinigung von Biopharmazeutika im Vergleich mit Silica basierenden Materialien vorteilhaft, da Polymere derart hergestellt werden können, dass diese die im Verlauf der Prozessierung erforderliche Reinigung der gefüllten Chromatographiesäule mittels Natronlauge überstehen.

Neben der hydrophoben Interaktionschromatographie (HIC), der Größenausschlusschromatographie (SEC), der Mixed Mode Chromatographie und der Affinitätschromatographie, kommt sehr häufig die Ionenaustauschchromatographie (IEX) zum Einsatz. Darüber hinaus sind auch andere Chromatographietypen, wie z.B. die Reversed Phase Chromatographie, bekannt. Eine Übersicht über verschiedene Chromatographiemedien und präparative Chromatographiemethoden wird z.B. in "Bioseparation and Bioprocessing", 2007, Editor Ganapathy Subramanian, Wiley-VCH Verlag GmbH & Co KGaA, gegeben.

Seit vielen Jahren ist bekannt, dass zur Generierung der gewünschten Funktionalität der Chromatographiematerialien lineare Polymere, die durch Pfropfen entsprechender funktionalisierter Monomere auf eine Vielzahl unterschiedlicher Oberflächen erhalten werden, geeignet sind. Wenn es sich bei der Funktionalisierung um chemisch gebundene ionische Gruppierungen handelt, können entsprechende Materialien für die Ionenaustauschchromatographie verwendet werden (W. Müller, J. Chromatography 1990, 510, 133-140). Eine größere Anzahl an möglichen Pfropfpolymerstrukturen, die für die Fraktionierung von Biopolymeren vorgesehen sind, findet sich in den Patenten EP 0 337 144 oder US 5,453,186. Auch Pfropfpolymere aus mehr als einem Monomerbaustein, die durch Copolymerisation erhalten werden, sind aus der Patentliteratur bekannt.

In der aus EP 0337144 oder WO 9614151 bekannten, durch Ce(IV)-Ionen initiierten Pfropfpolymerisation, wird das Vorhandensein von Hydroxylgruppen auf der Oberfläche des verwendeten Trägermaterials ausgenutzt, um kovalente Bindungen am Grundträger mit dem Polymer herzustellen. Daher scheint diese Methode nur für Trägermaterialien geeignet zu sein, welche unter den gegebenen Reaktionsbedingungen Hydroxylgruppen an der Oberfläche aufweisen, nicht jedoch für Materialien, denen diese Gruppen fehlen. Üblicherweise handelt es sich bei den verwendeten Trägermaterialien, auf die durch eine Ce(IV)-initiierte Pfropfpolymerisation chromatographisch aktive Gruppen gebunden werden, um anorganische Trägermaterialien, wie beispielsweise SiO₂, Al₂O₃, MgO, TiO₂ oder ZrO₂. Bei diesen Materialien ist es sogar möglich, die Zahl der auf der Oberfläche befindlichen OH-Gruppen zu erhöhen, um in einer darauf folgenden Reaktion eine dichtere Belegung mit reaktiven Gruppen zu erzielen (EP 1 051 254 B1). Aufgrund der vielseitigen Reaktionsmöglichkeiten dieser oxidischen, anorganischen Trägermaterialien werden üblicherweise durch Pfropfpolymerisation gewonnene Chromatographiematerialien unter Verwendung von entsprechenden oxidischen, anorganischen Trägermaterialien, insbesondere von geeigneten Silikaten, bzw. Kieselgelen, hergestellt.

Für verschiedenste chromatographische Trennprobleme ist es von Vorteil, wenn Chromatographiematerialien verwendet werden, zu deren Herstellung organische Trägermaterialien eingesetzt werden. Dieses ist besonders erstrebenswert, wenn man alkali-, aber auch druckstabile Sorbentien für die Chromatographie herzustellen wünscht, die bei hohen Durchflussraten einsetzbar sind. Diese Eigenschaften der organischen Trägermaterialien müssen auch nach einer Derivatisierung erhalten bleiben und dürfen sich nicht verschlechtern.

Aus EP 0337144 A1 oder WO 96/31549 A1 ist bekannt, für die Ce(IV) initiierte Pfropfpolymerisationen zur Herstellung von Ionenaustauschern Trägermaterialien zu verwenden, welche an der Oberfläche der polymeren Grundträger Hydroxylgruppen aufweisen. In EP 0337144 A1 werden Sorbentien für die Ionenaustauscherchromatographie beschrieben, zu deren Herstellung u. a. diolsubstituierte (meth)-acrylatvernetzte Polymere als Basismaterialien eingesetzt, auf die derivatisierte Acrylamidmonomere aufgepfropft werden. So hergestellte Ionenaustauscher zeigen gute Trenneigenschaften und eine gute Druckstabilität, sind aber gegenüber alkalischen Lösungen beschränkt stabil. Aus WO 03/031062 wiederum ist die Verwendung von Diolgruppen haltigen vernetztem Vinylpolymer als Basismaterial bekannt, worauf in einer Cer-(IV)-initiierten Polymerisationsreaktion Polymere aufgebracht werden.

Ein wesentlicher Nachteil der Pfropfpolymerisierungen auf Trägermaterialien, die Hydroxylgruppen aufweisen, besteht darin, dass die Zahl der für die Reaktion zugänglichen OH-Gruppen an der Oberfläche begrenzt ist. Will man eine höhere Belegung der Oberflächen mit aufgepfropften Polymeren erzielen, ist es notwendig, wie in (EP 1 051 254 B1) beschrieben, durch zusätzliche und vorbereitende Reaktionsschritte die Zahl der reaktiven OH-Gruppen zu erhöhen.

Im Gegensatz dazu wird durch DE 41 29 901 A1 die Verwendung von Polyamidpartikeln als Basismaterial für Pfropfpolymerisierte Chromatographiematerialien beschrieben. In diesem Fall erfolgt die Pfropfpolymerisation strahleninduziert. Dieses Verfahren ist jedoch aufwendig und zeitintensiv durchzuführen. Weiterhin sind die auf dieser Basis hergestellten Chromatographiematerialien nicht für jede Trennmethode geeignet.

### Zu lösende Aufgabe

Aufgabe der vorliegenden Erfindung ist es daher, ein Verfahren zur Verfügung zu stellen, durch das die Möglichkeit gegeben wird, in einfacher und vielfältiger Weise pfropfpolymerisierte Chromatographiematerialien auf der Basis von Polymeren herzustellen, welche zwar keine reaktiven Hydroxylgruppen an der Oberfläche aufweisen, sich jedoch in einer durch Ce(IV)-Ionen initiierten Pfropfpolymerisationsreaktion in einfacher Weise derivatisieren lassen. Aufgabe der vorliegenden Erfindung ist es auch ein entsprechendes, einfach und preiswert durchführbares Verfahren zur Verfügung zu stellen, sowie Chromatographiematerialien mit einem weiten Anwendungsspektrum zur Verfügung zu stellen, und zwar hinsichtlich der Trennmöglichkeiten von Stoffgemischen verschiedenster Herkunft, aber auch hinsichtlich der Stabilität gegenüber dem Einfluss von Säuren, Basen, Druck oder Durchflussbedingungen.

### Gegenstand der Erfindung

Die Lösung der vorliegenden Aufgabe erfolgt durch ein neues Verfahren zur Herstellung von Chromatographiematerialien, indem organische, polymere Basismaterialien, welche an der Oberfläche frei sind von OH-Gruppen, in Gegenwart eines Ce(IV)-Initiators pfropfpolymerisiert werden. Als polymeres Basismaterial können partikelförmige Polymere eingesetzt werden, bestehend aus Homo- oder Copolymer, welche durch die Polymerisation von vinylgruppenhaltigen Monomeren gebildet werden und welche keine freien Hydroxylgruppen beinhalten. Hierzu geeignete polyvinylgruppenhaltige Monomere können z.B. sein Divinylbenzol, Trivinylbenzol, Divinyltoluol, Divinylpyridin, Divinylnaphthalen, Ethylenglykol-dimethacrylat, Polyethylenglykoldimethacrylat, Polypropylenglykoldimeth-acrylat, N,N-Methylen-bis-acrylamid, N,N-Divinylethylenharnstoff und N,N-Divinylpropylenharnstoff. Monovinylgruppenhaltige Monomere wie z.B. Methylmethacrylat, Ethylmethacrylat, Propylmethacrylat, Butylmethacrylat, Methylacrylat, Ethylacrylat, Propylacrylat, Butylacrylat, Acrylnitril, N-Vinylpyrrolidon, N-Methyl-N-vinylacetamid, Chlorstyrol oder Aminostyrol, werden ausschließlich in Kombination mit einem der vorgenannten Polyvinylverbindungen zur Herstellung der entsprechend dieser Offenbarung geeigneten Copolymere umgesetzt. In einer anschließenden Reaktion werden diese Polymerpartikel, welche keine Hydroxylgruppen aufweisen, in geeigneter Weise pfropfpolymerisiert.

Die eingesetzten nicht hydroxylgruppenhaltigen Basismaterialien bestehen bevorzugt aus Partikeln mit einem mittleren Partikeldurchmesser im Bereich von 20 nm bis 1000 µm. Die Pfropfpolymerisation kann aber auch durchgeführt werden auf der Oberfläche von geformten Polymerkörpern oder auf der Oberfläche von monolithischen, porösen Polymerkörpern, wie monolithischen Trennsäulen. Erfindungsgemäß ist es überraschenderweise möglich, durch die Ce(IV)-induzierte Pfropfpolymerisation die Oberfläche der beschriebenen Polymermaterialien zu derivatisieren. Die Derivatisierung kann sowohl an entsprechenden Polymerpartikeln als auch an entsprechenden geformten monolithischen Polymerkörpern erfolgen. Insbesondere ist es möglich die innere Porenoberfläche sowohl der Makroals auch der Mesoporen der Trägermaterialien gleichmäßig zu derivatisieren, und zwar auch die inneren Porenoberflächen der Polymerpartikel. Aber auch polymere Trennmembranen lassen sich auf diese Weise behandeln.

Die Derivatisierung der nicht hydroxylgruppenhaltigen Oberfläche kann erfolgen durch Pfropfpolymere, welche aus entweder gleichartigen Monomeren oder aus mindestens zwei verschiedenen Monomereinheiten aufgebaut sind. Bevorzugt erfolgt die Herstellung des an der Oberfläche des Trennmaterials kovalent gebundenen Pfropfpolymers unter Verwendung von wasserlöslichen Monomereinheiten der allgemeinen Formel (1) 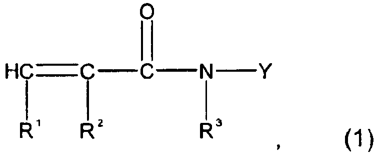 oder der allgemeinen Formel (2) 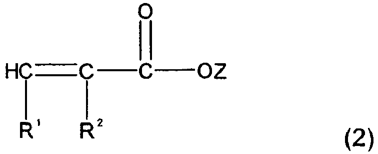 worin
- Y: R⁴-SO₃M
- R¹ und R²: unabhängig voneinander H, geradkettiges oder verzweigtes Alkyl mit 1 bis 6 C-Atomen, Carboxy, Carboxymethyl
- R³: H, geradkettiges oder verzweigtes Alkyl mit 1 bis 6 C-Atomen, Y
- R⁴: geradkettiges oder verzweigtes Alkylen mit bis zu 8 C-Atomen, gegebenenfalls ein- oder mehrfach durch Alkoxy- oder Carboxygruppen substituiert oder/und Arylen mit bis zu 10 C-Atomen, gegebenenfalls ein- oder mehrfach durch Alkyl, Alkoxy- oder Carboxygruppen substituiert oder Methylen, Ethylen, Propylen, Hexylen, Isopropylen, Isobutylen oder Phenylen
bedeuten und
- M: H, Na, K oder NH₄ und
- Z: Y.

Solch ein kovalent gebundenes Pfropfpolymer kann ebenfalls hergestellt sein unter Verwendung von mindestens einer wasserlöslichen Monomereinheit der allgemeinen Formel (1) 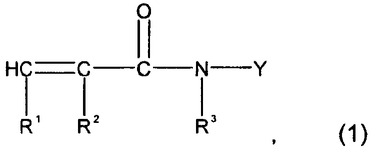 oder der allgemeinen Formel (2) 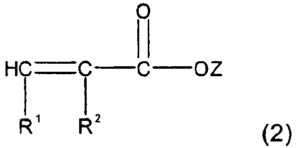 worin
- Y: R⁵-COOM
- R¹ und R²: unabhängig voneinander H, geradkettiges oder verzweigtes Alkyl mit 1 bis 6 C-Atomen, Carboxy, Carboxymethyl
- R³: H, geradkettiges oder verzweigtes Alkyl mit 1 bis 6 C-Atomen, Y
- R⁵: geradkettiges oder verzweigtes Alkylen mit bis zu 8 C-Atomen, gegebenenfalls ein- oder mehrfach durch Alkoxy- oder Carboxygruppen substituiert oder/und Arylen mit bis zu 10 C-Atomen, gegebenenfalls ein- oder mehrfach durch Alkyl, Alkoxy- oder Carboxygruppen substituiert oder Methylen, Ethylen, Propylen, Hexylen, Isopropylen, Isobutylen oder Phenylen
bedeuten und
- M: H, Na, K oder NH₄ und
- Z: M oder Y.

Besonders vorteilhafte Eigenschaften weisen Trennmaterialien mit Pfropfpolymeren auf, die hergestellt sind unter Verwendung mindestens einer Verbindung ausgewählt aus der Gruppe der Methacrylamide, der Acrylamide oder der ungesättigten Carbonsäuren.

Gegenstand der vorliegenden Erfindung sind auch Trennmaterialien mit Pfropfpolymeren, wie vorher beschrieben, zu deren Herstellung mindestens eine Verbindung ausgewählt aus der Gruppe der Sulfoalkylacrylate, wie 3-Sulfopropylacrylat oder 2-Sulfoethylacrylat, Vinylsulfonsäure, Styrolsulfonsäure, Allylsulfonsäure und, Vinyltoluolsulfonsäure oder aus der Gruppe der Sulfoalkylmethacrylate, wie 2-Sulfoethylmethacrylat oder 3-Sulfopropylmethacrylat eingesetzt wird.

Erfindungsgemäß kann aber auch zur Herstellung von geeigneten, derivatisierten Trennmaterialien mindestens eine Verbindung, ausgewählt aus der Gruppe Maleinsäure, Zimtsäure, Itaconsäure, Citraconsäure, Mesaconsäure, oder Fumarsäure oder der Gruppe der Carboxyalkylacrylate, wie Carboxyethylacrylat oder der Carboxyalkylmethacrylate eingesetzt werden.

Für den erfindungsgemäßen Zweck gut geeignete Trennmaterialien können darüber hinaus hergestellt werden, wenn die Pfropfpolymere unter Verwendung von mindestens einer Verbindung, ausgewählt aus der Gruppe Carboxymethylacrylamid, Carboxyethylacrylamid, Acryloyl-gammaaminobuttersäure und Acyloylphenylalanin, Acrylsäure, Methacrylsäure und Ethacrylsäure hergestellt werden.

Gegenstand der vorliegenden Erfindung sind auch entsprechende Anionenaustauschermaterialien, welche ebenfalls erhalten werden durch Pfropfpolymerisation geeigneter Monomere auf organischen polymeren Basismaterialien, welche an der Oberfläche frei sind von OH-Gruppen.

Monomere zur Herstellung von erfindungsgemäßen Anionenaustauschermaterialien können beispielsweise primäre, sekundäre oder tertiäre Aminogruppen tragen oder quartäre Ammoniumsalze sein.

Geeignete Monomere mit Amino-Gruppen sind beispielsweise Acrylate der allgemeinen Formel (2) 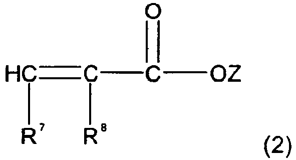
mit Z = R4-NR9R10,
worin R7 und R8 unabhängig voneinander die Bedeutungen Wasserstoff oder Alkyl mit bis zu 6 C-Atomen, bevorzugt Wasserstoff oder Methyl haben können und worin R4 eine geradkettige Alkylengruppe mit 1 bis 8 C-Atomen, wie zum Beispiel Methylen, Ethylen, Propylen oder Hexylen, oder eine verzweigte Alkylengruppe mit 1 bis 8 C-Atomen sein kann, wie zum Beispiel Isopropylene oder Isobutylen, und worin R9 und R10 unabhängig voneinander die Bedeutungen Wasserstoff, Alkyl, Phenyl oder Alkylphenyl, wie zum Beispiel Methyl, Ethyl oder Benzyl haben. Beispielhaft sind die Aminoalkylacrylate, wie 2-(Diethylaminoethyl)acrylat, 2-(Dimethylaminoethyl)acrylat oder 2-(Dimethylaminopropyl)acrylat, und die Aminoalkylmethacrylate, wie 2-(Diethylaminoethyl)methacrylat, 2- (Dimethylaminoethyl)-methacrylat oder 3-(Diethylaminopropyl)methacrylat erwähnt.

Bevorzugt werden die Acrylamide der Formel (1) 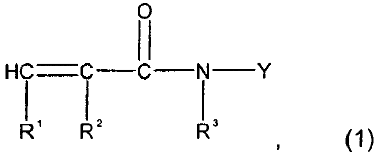
mit R³ = R⁴-NR⁹R¹⁰ eingesetzt,
worin R¹, R² und Y unabhängig voneinander die Bedeutungen Wasserstoff oder Alkyl mit bis zu 6 C-Atomen haben, bevorzugt Wasserstoff oder Methyl, und worin
R⁴ eine geradkettige Alkylengruppe mit 1 bis 8 C-Atomen, wie zum Beispiel Methylen, Ethylen, Propylen oder Hexylen, oder eine verzweigte Alkylengruppe mit 1 bis 8 C-Atomen sein kann, wie zum Beispiel Isopropylene oder Isobutylen, und worin
R⁹ und R¹⁰ unabhängig voneinander die Bedeutungen Wasserstoff, Alkyl, Phenyl oder Alkylphenyl, wie zum Beispiel Methyl, Ethyl oder Benzyl haben. Als geeignete Acrylamide seien hier beispielhaft 2-(Diethylaminoethyl)acrylamid, 2-(Dimethylaminoethyl)acrylamid, 3-(Diethylaminopropyl)acrylamid oder 3-(Diethylaminopropyl)acrylamid genannt und als geeignete Methacrylamide seien hier beispielhaft 2-(Diethylaminoethyl)methacrylamid, 2-(Dimethylaminoethyl)methacrylamid, 3-(Diethylaminopropyl)methacrylamid oder 3-(Diethylaminopropyl)methacrylamid genannt.

Geeignete Monomere, die quartäre Ammoniumsalze sind, sind beispielsweise Acrylate der Formel (2) 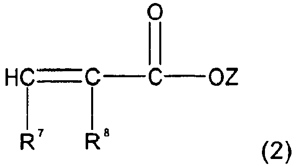
mit Z = R⁴-NR⁹R¹⁰R¹¹X, worin
R⁷ und R⁸ unabhängig voneinander die Bedeutungen Wasserstoff oder Alkyl mit bis zu 6 C-Atomen, bevorzugt Wasserstoff oder Methyl haben können und worin R⁴ eine geradkettige Alkylengruppe mit 1 bis 8 C-Atomen, wie zum Beispiel Methylen, Ethylen, Propylen oder Hexylen, oder eine verzweigte Alkylengruppe mit 1 bis 8 C-Atomen sein kann, wie zum Beispiel Isopropylen oder Isobutylen, und worin R⁹, R¹⁰ und R¹¹ unabhängig voneinander die Bedeutungen Wasserstoff, Alkyl, Phenyl oder Alkylphenyl, wie zum Beispiel Methyl, Ethyl oder Benzyl haben. X ist ein Anion und so gewählt, dass das Monomer wasserlöslich ist, und kann zum Beispiel Chlorid oder Iodid sein. Beispielhaft sind die Acryloxyammoniumsalze, wie [2-(Acryloxy)ethyl]trimethylammoniumchlorid und Methacryloxyammoniumsalze, wie [2-(Methacryloxy)ethyl]trimethylammoniumchlorid erwähnt.

Bevorzugt werden die Acrylamide der allgemeinen Formel (1) 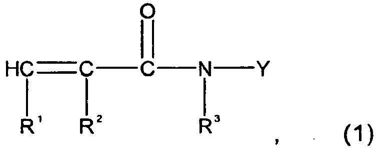 eingesetzt, worin
R¹, R² und Y unabhängig voneinander die Bedeutungen Wasserstoff oder Alkyl mit bis zu 6 C-Atomen haben, bevorzugt Wasserstoff oder Methyl, und worin R4 eine geradkettige Alkylengruppe mit 1 bis 8 C-Atomen, wie zum Beispiel Methylen, Ethylen, Propylen oder Hexylen, oder eine verzweigte Alkylengruppe mit 1 bis 8 C-Atomen sein kann, wie zum Beispiel Isopropylene oder Isobutylen, und worin R⁹, R¹⁰ und R¹¹ unabhängig voneinander die Bedeutungen Wasserstoff, Alkyl, Phenyl oder Alkylphenyl, wie zum Beispiel Methyl, Ethyl oder Benzyl haben. X ist ein Anion und so gewählt, dass das Monomer wasserlöslich ist, und kann zum Beispiel Chlorid, Iodid oder Methysulfat sein. Als geeignete Acrylamide seien hier beispielhaft 2-(Acryloylaminoethyl)trimethylammoniumchlorid und 3-(Acryloylaminopropyl)-trimethyl-ammoniumchlorid genannt und als geeignete Methacrylamide seien hier beispielhaft 2-(Methacryloylamino-ethyl)trimethylammoniumchlorid und 3-(Acryloylaminopropyl)-trimethyl-am-moniumchlorid genannt.

Da es für die Abtrennung von bestimmten Biomolekülen von Vorteil sein kann, wenn eine Wechselwirkung mit einem hydrophoben Anteil des Trennmaterials erfolgen kann, sind auch Trennmaterialien bevorzugt, welche kovalent gebundene Pfropfpolymere an der Oberfläche aufweisen, und welche wiederum hergestellt sind unter Verwendung von mindestens einer Monomereinheit mit einem ausgeprägten hydrophoben Anteil in Form von mindestens einer Alkyl- oder Arylgruppe mit geeigneter Zahl an Kohlenstoffatomen und mindestens einer weiteren Monomereinheit, welche eine Ladung trägt. Solche Trennmaterialien haben sich als besonders wirksam erwiesen, da sie sowohl mit dem hydrophoben Anteil als auch mit dem geladenen Anteil des Pfropfpolymers mit dem abzutrennenden Biopolymer in Wechselwirkung treten können.

Folglich ist eine Derivatisierung unter Verwendung mindestens einer Monomereinheit mit hydrophobem Anteil, ausgewählt aus der Gruppe der Alkylvinylketone, Arylvinylketone, Arylalkylvinylketone, Styrol, Alkylacrylate, Arylacrylate, Arylalkylacrylate, Alkylarylacrylate, Alkylmethacrylate, Arylmethacrylate, Arylalkylmethacrylate und Alkylarylmethacrylate besonders erstrebenswert.

Auch lassen sich besonders wirksame Trennmaterialien herstellen unter Verwendung mindestens einer Monomereinheit der allgemeinen Formel (1) mit hydrophobem Anteil,
worin Y = R⁶ bedeutet
und worin
- R¹ und R²: unabhängig voneinander H, unverzweigtes oder verzweigtes Alkyl mit bis zu 6 C-Atomen
- R³ und/oder R⁶: unabhängig voneinander H, unverzweigtes oder verzweigtes Alkyl, Aryl, Alkylaryl, Arylalkyl bedeuten,
wobei die Alkylgruppe Oxogruppen tragen kann,
wobei die Alkyl- und/oder Arylgruppe ein- oder mehrfach durch Alkoxy, Phenoxy, Cyano, Carboxy, Acetoxy- oder Acetamino-Gruppen substituiert sein kann,
und wobei R³ und R⁶ zusammen mindestens 6 C-Atome tragen,
bedeuten.

Trennmaterialien gemäß der vorliegenden Erfindung können daher hergestellt werden unter Verwendung mindestens einer Monomereinheit der allgemeinen Formel (1) mit hydrophobem Anteil, worin
- R³ , R⁶: unabhängig voneinander H, Methyl, Ethyl, Propyl, Butyl, Pentyl, Hexyl, Heptyl, Octyl, Nonyl, Decyl, 2-, 3-, oder 4- Oxapentyl, 2-, 3-, 4- oder 5- Oxahexyl, 2-, 3-, 4-, 5- oder 6- Oxaheptyl, 3-Butoxypropyl, Isopropyl, 3-Butyl, Isobutyl, 2-Methylbutyl, Isopentyl, 2-Methylpentyl, 3-Methylpentyl, 2-Oxa-3-methylbutyl, 2-Methyl-3-oxahexyl, 2-Phenyl-2-oxoethyl, Phenoxyethyl, Phenyl, Benzyl, Phenylethyl und Phenylpropyl
und wobei R³ und R⁶ zusammen mindestens 6 C-Atome tragen,
bedeuten.

Erfindungsgemäße Trennmaterialien werden demzufolge auch hergestellt unter Verwendung mindestens einer dieser Monomereinheiten mit einer funktionellen Gruppe mit Ladung und mindestens einer Monomereinheit, welche eine hydrophobe Gruppe aufweist, die dem Mischpolymer neben der Ladung einen hydrophoben Charakter verleiht, sowie gegebenenfalls mindestens einer neutralen Monomereinheit, die hydrophil sein kann. Besonders bevorzugt sind solche Trennmaterialien, welche hergestellt sind unter Verwendung mindestens einer neutralen Monomereinheit, der allgemeinen Formel (1), die hydrophil sein kann,
mit Y = R⁶ und worin
- R¹, R², R³, R⁶: unabhängig voneinander H oder Methyl unabhängig voneinander H, Alkyl, Alkoxyalkyl jeweils mit bis zu 4 C-Atomen bedeuten.

Ganz besonders bevorzugt sind Trennmaterialien mit mindestens einer neutralen Monomereinheit, die hydrophil sein kann, der allgemeinen Formel (1)
mit Y = R⁶, worin
- R¹, R², R³, R⁶: unabhängig voneinander H oder Methyl unabhängig voneinander H, Methyl, Ethyl, Butyl, Isopropyl, 3-Butyl, Isobutyl, Methoxyethyl oder Ethoxyethyl bedeuten.

Zur Herstellung des Pfropfpolymers kann auch mindestens eine neutrale Monomereinheit, ausgewählt aus der Gruppe Acrylamid (AAm), Dimethylacrylamid, Methacrylamid, Isopropylacrylamid, Methoxyethylacrylamid und Ethoxyethylacrylamid oder aus der Gruppe Methylacrylat und Methylmethacrylat eingesetzt werden, sowie unter Verwendung von zwei oder drei Monomeren ausgewählt aus der Gruppe 2-Acrylamido-2-methylpropansulfonsäure, Acrylsäure, N-Arylalkylacrylamide, wie Benzylacrylamid und Acryloylphenylalanin, N-Carboxyalkylacryl-amide, wie Acryloyl-gamma-aminobutter-säure, und N-Alkylacrylamide.

Gegenstand der vorliegenden Erfindung sind insbesondere auch Trennmaterialien mit Pfropfpolymeren, wie vorher beschrieben, worin das Verhältnis der Einheiten, die Ladungen tragen, zu den Einheiten mit aromatischen Gruppen in einem Bereich zwischen 99:1 bis 10:90, bevorzugt in einem Bereich zwischen 96:4 bis 40:60, liegt.

Die eigentliche erfindungsgemäße Pfropfpolymerisationsreaktion auf nicht hydroxylgruppenhaltigen Oberflächen wird durch Cer(IV)-Ionen initiiert. Diese Reaktion findet statt in verdünnten Mineralsäuren, ausgewählt aus der Gruppe bestehend aus Salpetersäure, Schwefelsäure und Salzsäure. In verdünnter Salpetersäure sind hydrophobe Monomere kaum oder nicht löslich sind. Die Reaktion kann auch in verdünnter Schwefelsäure oder Salzsäure durchgeführt werden. Bevorzugt wird jedoch in verdünnter Salpetersäure gearbeitet und zwar in einer Konzentration im Bereich von 1 bis 0,00001 mol/l Durch den Zusatz eines Lösungsvermittlers oder eines Cosolvens, bevorzugt Dioxan, kann ein hydrophobes Monomer gelöst und gepfropft werden. Bevorzugt werden 0,05 - 100 mol Monomere je Liter sedimentiertes Trägermaterial eingesetzt.

Vorzugsweise erfolgt die Durchführung des erfindungsgemäßen Verfahrens zur Herstellung der Trennmaterialien indem
a) ein Monomer in Wasser gelöst wird, welches gegebenenfalls mit weiteren Monomeren gemischt wird,
b) die erhaltene Lösung mit dem Trägermaterial derart vermischt wird, dass 0,05 bis 100 mol Gesamtmonomer je Liter sedimentiertes Polymermaterial eingesetzt werden,
c) zu der erhaltenen Suspension in Mineralsäure gelöstes Cer(IV)-salz hinzugefügt wird, wodurch sich ein pH-Wert im Bereich von 0 - 5 einstellt, und
d) das Reaktionsgemisch innerhalb von einer Zeit von 0,5 bis 72 Stunden pfropfpolymerisiert wird.

Gegenstand der vorliegenden Erfindung ist damit auch das so erhaltene Trennmaterial, welches in Form einer Chromatographiesäule vorliegen kann, und welches erfindungsgemäß durch Pfropfpolymerisation derivatisiert worden ist.

Die vorliegende Erfindung umfasst ebenfalls die Verwendung der erfindungsgemäßen Trennmaterialien zur Abtrennung von Biopolymeren aus flüssigen Medien, insbesondere zur Abtrennung von Protein aus flüssigen Medien oder zur Abtrennung von Antikörper aus flüssigen Medien. Besonders selektiv gestaltet sich die Abtrennung, wenn das Biopolymer mit den ionischen, hydrophilen und gegebenenfalls mit den hydrophoben Gruppen des an der Oberfläche des Trägermaterials kovalent gebundenen Pfropfpolymers in Wechselwirkung tritt. Hierbei wird das Biopolymer adsorbiert, indem es sowohl mit dem geladenen Anteil des Pfropfpolymers als auch mit dem hydrophoben Anteil in Wechselwirkung tritt. Die anschließende Freisetzung des adsorbierten und aus der Flüssigkeit abgetrennten Biopolymers kann erfolgen, indem das durch Wechselwirkung mit den ionischen und gegebenenfalls hydrophoben Gruppen an das Trennmaterial gebundene Biopolymer entweder durch
a) Erhöhen der Ionenstärke und/oder
b) durch Änderung des pHs
   in der Lösung
   und/oder
c) durch einen geeigneten Eluenten mit anderer Polarität als der des Adsorptionspuffers wieder desorbiert wird.

Die beschriebenen, erfindungsgemäßen pfropfpolymerisierten Trennmaterialien können auch als mit Separationseffektoren versehene Polymere beschrieben werden. Sie können verwendet werden für
- die selektive, bedingt selektive oder unselektive Bindung oder Adsorption einer oder mehrerer Zielkomponenten mit dem Ziel der Abtrennung aus einer Matrix heraus
- die selektive, bedingt selektive oder unselektive Bindung oder Adsorption einer oder mehrerer Nebenkomponenten mit dem Ziel der Abtrennung der Nebenkomponente aus einer Matrix heraus
- die Auftrennung eines Stoffgemisches ohne Bindung oder Adsorption einer oder mehrerer Komponenten nur aufgrund der Molekulargröße gemäß Größenausschlusschromatographie
- die Isolierung, Anreicherung und/oder Abreicherung von Biopolymeren aus natürlichen Quellen
- die Isolierung, Anreicherung und/oder Abreicherung von Biopolymeren aus rekombinanten Quellen
- die Isolierung, Anreicherung und/oder Abreicherung von Bioploymeren aus immortalisierten Zellinien sowie deren Kulturüberständen
- die Isolierung, Anreicherung und/oder Abreicherung von Bioploymeren aus B-Zellinien und deren Derivaten, Lymphzellen und Hybridomazellinien und deren Kulturüberständen
- die Isolierung, Anreicherung und/oder Abreicherung von Proteinen und Peptiden
- die Isolierung, Anreicherung und/oderAbreicherung von Enzymen
- die Isolierung, Anreicherung und/oder Abreicherung von monoklonalen und polyklonalen Antikörpern und natürlich vorkommenden oder rekombinanten Antikörperfragmenten
- die Isolierung, Anreicherung und/oder Abreicherung phosphorylierter Peptide/proteine und Nukleinsäuren
- die Isolierung, Anreicherung und/oder Abreicherung von Lebensmittelzusatzstoffen
- die Isolierung, Anreicherung und/oder Abreicherung von Mono- und Polysaccharide
- die Isolierung, Anreicherung und/oder Abreicherung von glykosylierten Proteinen
- die Isolierung, Anreicherung und/oder Abreicherung von einsträngiger oder doppelsträngiger DNS
- die Isolierung, Anreicherung und/oder Abreicherung von Plasmid DNA
- die Isolierung, Anreicherung und/oder Abreicherung von RNA
- die Isolierung, Anreicherung und/oder Abreicherung von Viren
- die Isolierung, Anreicherung und/oder Abreicherung von Host Cell Proteinen
- die Isolierung, Anreicherung und/oder Abreicherung von Oligo- und Polynukleotiden
- die Isolierung, Anreicherung und/oder Abreicherung von Liposomen
- die Isolierung, Anreicherung und/oder Abreicherung von Produkten aus Blut und Milch
- die Isolierung, Anreicherung und/oder Abreicherung von niedermolekularen Arzneimittelwirkstoffen (APIs: active pharmaceutical ingredient)
- der Abtrennung eines APIs von einem API-Arzneistoffträger (z.B. ein API-Liposom Addukt oder ein API-Nanopartikel Addukt)
- die Isolierung, Anreicherung und/oder Abreicherung von Enantiomeren

Nach Art der Separationseffektoren entspricht die Verwendung der erfindungsgemäßen Polymere beispielhaft der Affinitätschromatographie, der Ionenaustauschchromatographie, der hydrophoben Interaktionschromatographie, der Größenausschlußchromatographie, der chiralen Chromatographie oder der mixed-mode Chromatographie oder der flüssig-flüssig Verteilungschromatographie

Die entsprechend der gewünschten Anwendung erfindungsgemäßen, mit Separationseffektoren versehenen Polymere können in bekannten chromatographischen Verfahren in denen ein Sorbens verwendet wird, Verwendung finden. Grundsätzlich sind diese Verfahren in diskontinuierliche und kontinuierliche Verfahren zu unterteilen. Beispiele für diskontinuierliche Verfahren sind in "Preparative Chromatography" (Ed. H. Schmidt-Traub, Wiley-VCH Verlag Weinheim, 2005, ISBN 3-527-30643-9, Seite 183-189) genannt. Weitere Beispiele sind die Flash-Chromatographie, die Expanded Bed Chromatographie u.a. Des weiteren können die erfindungsgemäßen Polymere, in ihrer nativen Form oder entsprechend der Anwendung mit Separationseffektoren versehen, in kontinuierlichen Verfahren wie z.B. der Simulated Bed Chromatography Verwendung finden. Weitere Beispiele für diskontinuierliche Verfahren sind in "Preparative Chromatography" (Ed. H. Schmidt-Traub, Wiley-VCH Verlag Weinheim, 2005, ISBN 3-527-30643-9, Seite 190-204) beschrieben.

Sowohl die kontinuierlichen Verfahren als auch die diskontinuierlichen Verfahren können je nach Zielstellung sowohl isokratisch als auch unter Verwendung der Gradienten-Technik durchgeführt werden. Dem Fachmann ist bekannt, wie das erfindungsgemäße Sorbens, nativ oder mit Separationseffektoren versehen, für die gewünschte Zielstellung in einem der genannten Verfahren einzusetzen ist.

Auch können die erfindungsgemäßen Polymere in der Dünnschichtchromatographie Verwendung finden.

### Ausführliche Beschreibung der Erfindung

Durch Versuche wurde überraschenderweise gefunden, dass die Ce(IV) initiierte Pfropfpolymerisation auch auf nicht hydroxylgruppenhaltigen Polymeren erfolgreich durchzuführen ist, so dass neuartige pfropfpolymerisierte Chromatographiematerialien mit verbesserten Eigenschaften hergestellt werden können.

Der Erfindung entsprechende pfropfpolymerisierte Chromatographiematerialien mit verbesserten Eigenschaften wurden beispielsweise hergestellt, indem eine durch Ce(IV) initiierte Pfropfpolymerisation auf Poly(methylmethacrylat-co-ethylenglykoldimeth-acrylat)-Grundkörpern (Poly(MMA/EGDMA), Ansatz MMA/EGDMA-SO3 Ansatz 06MJ-DZ109) oder auf Poly(1-vinyl-2-pyrrolidon-co-1,3-divinylimidazolin-2-on) -Grundkörpern (Poly(NVP/DVH), DVH-SO3 Ansatz 07MJ-DZ077) oder auf Poly(ethylstyrol-co-divinylbenzol)-Grundkörpern (Poly(ES/DVB)) durchgeführt wurde. Die so erhaltenen Ionenaustauscher können in gleicher Weise eingesetzt werden wie Ionenaustauscher, welche auf hydroxylgruppenhaltigen Basisträgern hergestellt wurden. Insbesondere können sie verwendet werden wie Chromatographiematerialien. Hier sind sie besonders gut geeignet zur Abtrennung von gegebenenfalls geladenen Biomolekülen aus Flüssigkeiten.

Die zur Durchführung der Pfropfpolymerisation verwendeten Trägermaterialien können in Form von Partikeln oder als monolithische Formkörper eingesetzt werden. Wesentlich ist in diesem Zusammenhang, dass die Trägermaterialien eine poröse Struktur aufweisen. Besonders wünschenswert ist in diesem Zusammenhang eine bimodale Porenstruktur, wobei Partikel, insbesondere aber monolithische Formkörper sowohl Makroals auch Mesoporen aufweisen. Zur Herstellung der erfindungsgemäßen Trennmaterialien werden bevorzugt entsprechende Polymerpartikel mit einem mittleren Partikeldurchmesser im Bereich von 20 nm bis 1000 µm eingesetzt. Als monolithische, poröse, polymere Formkörper können Formkörper mit einem Durchmesser von wenigen Millimetern bis zu mehreren Zentimetern und einer entsprechenden Länge zur erfindungsgemäßen Pfropfpolymerisation eingesetzt werden. Wesentlich ist hier insbesondere eine bimodale Porenstruktur, wobei entsprechende Materialien mit Makroporen eines mittleren Durchmessers von 200 nm bis 100µm, bevorzugt 500 nm bis 10 µm, und mit Mesoporen eines mittleren Durchmessers von 1 bis 50 nm, bevorzugt 2 bis 20 nm, durch die erfindungsgemäße Pfropfpolymerisation zu Trennmaterialien mit guten Trennleistungen derivatisiert werden können. Insbesondere bevorzugt werden als Basismaterialien entsprechende organische Polymerpartikel mit einer mittleren Partikeloberfläche im bereich von 20 bis 1200 m²/g, bevorzugt von 100 bis 600 m²/g eingesetzt.

Die erfindungsgemäße Pfropfpolymerisation wird in Gegenwart eines Cer-Katalysators durchgeführt. Obwohl verschiedene Cer(IV)-Salze, wie z. B. auch das Ammonium-Cer(IV)-sulfat, sich als Katalysatoren für diese Verwendung als geeignet erwiesen haben, wird Ammoniumcer(IV)nitrat besonders bevorzugt für die Pfropfpolymerisationen als Katalysator eingesetzt. Zur Durchführung der Pfropfpolymerisation wird der Katalysator im allgemeinen in einer geeigneten Menge bezogen auf die gesamte Menge der vorgelegten Menge Monomere eingesetzt wird, und zwar wird der Katalysator in die Suspension des vorgelegten Trägermaterials und der Monomere zugegeben, wenn partikuläres Trägermaterial pfropfpolymerisiert wird. Vorzugsweise wird dabei der Katalysator in einer sauren wässrigen Lösung zu der Suspension der Reaktanden hinzugefügt. Um Nebenreaktionen mit dem Luftsauerstoff zu vermeiden, erfolgt die eigentliche Pfropfpolymerisation unter Inertgas. Vorzugsweise wird unter Stickstoffatmosphäre gearbeitet. Die Reaktion erfolgt dabei unter ständiger Durchmischung der Reaktionsmischung, insbesondere unter ständigem rühren. Zur Durchführung der Polymerisation wird die Temperatur etwas erhöht. Die Reaktion erfolgt, wie bereits erwähnt in Gegenwart mindestens einer anorganischen Säure, ausgewählt aus der Gruppe Salpetersäure, Schwefelsäure und Salzsäure. Vorzugsweise wird in Gegenwart von Salpetersäure oder Schwefelsäure gearbeitet. Besonders bevorzugt wird Salpetersäure eingesetzt. Als Lösungsmittel wird bevorzugt Wasser verwendet. Vorteilhafter Weise erfolgt die Reaktion in Gegenwart eines Cosolvens. Als besonders vorteilhaftes Cosolvens hat sich Dioxan erwiesen. Es können aber auch andere organische Lösungsmittel, wie verschiedene Alkohole, eingesetzt werden. Ein geeigneter Alkohol ist beispielsweise Dodecanol. Es können aber auch Alkohole mit ähnlicher Polarität eingesetzt werden.

Zur Durchführung der Polymerisationsreaktion wird der pH-Wert in der vorgelegten Suspension durch Zugabe von Säure und einer Base, bevorzugt von NaOH oder KOH, besonders bevorzugt von NaOH, auf einen Wert im Bereich von 5,5 bis 6,1, bevorzugt im bereich von 5,7 bis 5,9 eingestellt.

Die erhaltene Lösung mit dem Trägermaterial derart wird derart mit einer vorgelegten Menge Monomerlösung vermischt, dass sich ein Verhältnis von 0,05 bis 100 mol Gesamtmonomer je Liter sedimentiertes Polymermaterial ergibt. Zu dieser vorgelegten Suspension wird in Mineralsäure gelöstes Cer(IV)-salz hinzugefügt, wodurch sich der pH-Wert in einem Bereich von 0 - 5 einstellt. Das erhaltene Reaktionsgemisch wird innerhalb von 0,5 bis 72 Stunden pfropfpolymerisiert. Während dieser Zeit wird die Reaktionslösung intensiv gerührt.

Grundsätzlich erfolgt also die Ce(IV)-ionen katalysierte Reaktion in Gegenwart von mindestens einer anorganischen Säure. Zwar wird bevorzugt in Gegenwart von Salpetersäure gearbeitet, die oben genannten Säuren können in der Polymerisationsreaktion aber auch im Gemisch eingesetzt werden.

Als partikelförmiges Trägermaterial wird Hydroxylgruppen-freies sedimentiertes Polymerisat eingesetzt.

Unter "sedimentiertem Polymerisat" oder sedimentiertem Trägermaterial ist feuchtes Trägermaterial zu verstehen, das durch Sedimentation aus einer Suspension erhalten wird, das von überstehendem Lösungsmittel befreit ist. Üblicherweise wird entsprechendes Trägermaterial im feuchtem Zustand gelagert. Zur erfindungsgemäßen Verwendung wird vorab überstehendes Lösungsmittel abgesaugt. Anschließend wird zur Durchführung der Derivatisierung ein abgemessenes Volumen oder eine abgewogene Menge (nutschfeuchtes Material) in einem geeigneten Volumen oder in einer geeigneten Menge Monomerlösung suspendiert und der Pfropfpolymerisation unterzogen. Bei dem erfindungsgemäßen Trägermaterial handelt es sich um ein hydroxylgruppen-freies organisches, polymeres Trägermaterial.

Zur Pfropfpolymerisation eines organischen, monolithischen, porösen Formkörpers wird die beschriebene Vorgehensweise abgewandelt und der Formkörper mit einer entsprechenden Polymerisationslösung umspült und für eine angemessene Zeitdauer gelagert.

Nach erfolgter Pfropfpolymerisation wird das erhaltene Trennmaterial mehrmals mit verdünnten, sauren oder basischen Lösungen gewaschen und kann direkt nach geeigneter Vorbehandlung in einer Trennkolonne gefüllt werden und zur Stofftrennung eingesetzt werden.

Die vorliegende Beschreibung ermöglicht es dem Fachmann die Erfindung umfassend anzuwenden und auszuführen. Auch ohne weitere Ausführungen wird daher davon ausgegangen, dass ein Fachmann die obige Beschreibung im weitesten Umfang nutzen kann.

Bei etwaigen Unklarheiten versteht es sich von selbst, die zitierten Veröffentlichungen und Patentliteratur heranzuziehen.

Zum besseren Verständnis und zur Verdeutlichung der Erfindung werden im folgenden Beispiele gegeben, die im Rahmen des Schutzbereichs der vorliegenden Erfindung liegen. Diese Beispiele dienen auch zur Veranschaulichung möglicher Varianten. Aufgrund der allgemeinen Gültigkeit des beschriebenen Erfindungsprinzips sind die Beispiele jedoch nicht geeignet, den Schutzbereich der vorliegenden Anmeldung nur auf diese zu reduzieren.

Weiterhin versteht es sich für den Fachmann von selbst, dass sich sowohl in den gegebenen Beispielen als auch in der übrigen Beschreibung die in den Zusammensetzungen enthaltenen Komponentenmengen in der Summe immer nur zu 100 Gew. bzw. mol-% bezogen auf die Gesamtzusammensetzung aufaddieren und nicht darüber hinausgehen können, auch wenn sich aus den angegebenen Prozentbereichen höhere Werte ergeben könnten. Sofern nichts anderes angegeben ist, gelten %-Angaben als Gew. oder mol-%, mit Ausnahme von Verhältnissen, die in Volumenangaben wiedergegeben sind, wie beispielsweise Elutionsmittel, zu deren Herstellung Lösungsmittel in bestimmten Volumenverhältnissen im Gemisch verwendet werden.

Die in den Beispielen und der Beschreibung sowie in den Ansprüchen gegebenen Temperaturen gelten immer in °C.

### Beispiele

### Beispiel 1

### Synthese des Grundträgers Poly-MMA/EGDMA (intern EGDMA-L01)

In 1200 ml Wasser werden 2.4 g Polyvinylalkohol 40-88 (Merck), 5.28 g Natriumsulfat (Merck), 0.36 g Tributylphosphat (Merck) und 0.48 g Emulgator E30 (Leuna Tenside) gelöst. Diese wässerige Phase wird auf 40°C erwärmt. In 120 g Toluol (Merck), 160 g n-Heptanol (Merck), 1 g Methylmethacrylat (MMA, Merck) und 120 g Ethylenglykoldimethacrylat (EGDMA, Merck) werden bei Raumtemperatur 2.4 g AIBN (Merck) gelöst (organische Phase). Die organische Phase wird in einem inertisierten Polymerisationsgefäß unter intensivem Rühren zügig in die wässerige Phase gegeben. Innerhalb von 50 min wird auf 65°C aufgeheizt. Diese Temperatur wird für 2 h gehalten, abschließend wird für weitere 4 h bei 80°C polymerisiert. Die organischen Lösungsmittel werden weitgehend durch Wasserdampfdestillation entfernt. Das entstandene Polymerisat wird auf einer Nutsche mit Aceton und Wasser gewaschen. Die Oberfläche des Polymerisats beträgt 488 m²/g.

### Beispiel 2

### Synthese des Grundträgers Poly-NVP/DVH (intern: DVH-L06)

In 1200 ml Wasser werden 36 g Polyvinylalkohol 40-88 (Merck), 36 g Natriumchlorid (Merck) und 0.48 g Emulgator E30 (Leuna Tenside) gelöst. Diese wässerige Phase wird auf 40°C erwärmt. In 260 g Butylacetat (Merck), 1 g N-Vinylpyrrolidon (NVP, Merck) und 140 g 1,3-Divinylimidazolin-2-on (BASF) werden bei Raumtemperatur 1.2 g AIBN (Merck) gelöst (organische Phase). Die organische Phase wird in einem inertisierten Polymerisationsgefäß unter intensivem Rühren zügig in die wässerige Phase gegeben. Innerhalb von 50 min wird auf 65°C aufgeheizt. Diese Temperatur wird für 2 h gehalten, abschließend wird für weitere 4 h bei 80°C polymerisiert. Das entstandene Polymerisat wird auf einer Nutsche mit Aceton und Wasser gewaschen. Die Oberfläche des Polymerisats beträgt 408 m²/g.

### Beispiel 3

### Synthese des Grundträgers Poly-ES/DVB

In 1050 ml Wasser werden 19,8 g Magnesiumhydroxid (Merck), 32 g Natriumsulfat (Merck) und 0,189 g Emulgator E30 (Leuna Tenside) gelöst. Diese wässerige Phase wird auf 50°C erwärmt. In 185 g Toluol (Merck), 63 g Divinylbenzol (Aldrich) und 37 g Ethylstyrol (Aldrich) werden bei Raumtemperatur 1.05 g AIBN (Merck) gelöst (organische Phase). Die organische Phase wird in einem inertisierten Polymerisationsgefäß unter intensivem Rühren zügig in die wässerige Phase gegeben. Innerhalb von 50 min wird auf 72°C aufgeheizt. Diese Temperatur wird für 2 h gehalten, abschließend wird für weitere 4 h bei 80°C polymerisiert. Die organischen Lösungsmittel werden mittels Wasserdampfdestillation weitgehend entfernt. Das entstandene Polymerisat wird auf einer Nutsche mit Aceton und Wasser gewaschen. Die Oberfläche des Polymerisats beträgt 596 m²/g.

### Beispiel 4

### Synthese eines erfindungsgemäßen starken Kationenaustauschers basierend auf Poly-MMA/EGDMA Basisträger hergestellt entsprechend Beispiel 1 (intern 06MJ-DZ109)

In einem 250 ml Dreihalskolben (Tropftrichter, Gaseinleitungsrohr und KPG Rührer) werden 6,22 g 2-Acrylamido-2-methyl-1-propansulfonsäure (AMPS, Merck) und 17 g VE-Wasser vorgelegt. Der Kolben wird auf 8°C abgekühlt (dabei leichter Stickstoffstrom um zu starke Luftsauerstoffanreicherung in der Lösung zu vermeiden). Dazu gibt man 2 ml 2 M Natronlauge (Merck) und stellt mit Salpetersäure (65%, Merck) einen pH Wert von 5,8 ein. Man lässt den Kolben wieder auf RT kommen und spült weiter mit Stickstoff. In diese Lösung gibt man 20 ml über Nacht Schwerkraft sedimentiertes Polymerisat hergestellt entsprechend Beispiel 1. Mit VE-Wasser wird auf ein Gesamtvolumen von 60 ml aufgefüllt. Der pH Wert wird erneut auf 5,8 eingestellt. Hierzu gibt man noch 16 µl Dodecanol. In einem Becherglas werden 1,4 g VE Wasser mit 0,29 g 65%iger Salpetersäure gemischt. In dieser Lösung werden 0,66 g Ammoniumcer(IV)-nitrat (Merck) gelöst. Die Suspension im Kolben wird auf 42°C erwärmt. Die Ammoniumcer(IV)-nitratlösung wird unter kräftigem Rühren zügig zu der Suspension zugegeben. Nach der Zugabe der Ammoniumcer(IV)-nitratlösung wird die Rührergeschwindigkeit unmittelbar so zurückgenommen, dass die Suspension gerade in der Schwebe gehalten wird. Bei dieser Drehzahl wird 3 h gerührt. Anschließend wird der Nutschkuchen mit 3 x 125 ml Wasser, 5 x 15 ml 1 M Schwefelsäure/0,2 M Ascorbinsäure, 3 x 15 ml VE-Wasser, 5 x 15 ml 1 M NaOH, 3 x 15 ml VE-Wasser, 3 x 15 ml 1 M HCl und 3 x 15 ml VE-Wasser auf einer 125ml-Borosilicat-3.3-Fritte gewaschen. Die CHNS Analyse des getrockneten Produktes ergibt einen Schwefelgehalt von 2,0 w%.

### Beispiel 5

### Synthese eines erfindungsgemäßen starken Kationenaustauschers basierend auf Poly-NVP/DVH Basisträger hergestellt entsprechend Beispiel 2 (intern 07MJ-DZ078)

In einem 250 ml Dreihalskolben (Tropftrichter, Gaseinleitungsrohr und KPG Rührer) werden 3,73 g 2-Acrylamido-2-methyl-1-propansulfonsäure (AMPS, Merck) und 25 g VE-Wasser vorgelegt. Der Kolben wird auf 8°C abgekühlt (dabei leichter Stickstoffstrom um zu starke Luftsauerstoffanreicherung in der Lösung zu vermeiden). Dazu gibt man 2 ml 2 M Natronlauge (Merck) und stellt mit Salpetersäure (65%, Merck) einen pH Wert von 5,8 ein. Man lässt den Kolben wieder auf RT kommen und spült weiter mit Stickstoff. In diese Lösung gibt man 15 ml über Nacht Schwerkraft sedimentiertes Polymerisat hergestellt entsprechend Beispiel 2. Mit VE-Wasser wird auf ein Gesamtvolumen von 90 ml aufgefüllt. Der pH Wert wird erneut auf 5,8 eingestellt. Hierzu gibt man noch 24 µl Dodecanol. In einem Becherglas werden 1,0 g VE Wasser mit 0,44 g 65%iger Salpetersäure gemischt. In dieser Lösung werden 0,49 g Ammoniumcer(IV)-nitrat (Merck) gelöst. Die Suspension im Kolben wird auf 42°C erwärmt. Die Ammoniumcer(IV)-nitratlösung wird unter kräftigem Rühren zügig zu der Suspension zugegeben. Nach der Zugabe der Ammoniumcer(IV)-nitratlösung wird die Rührergeschwindigkeit unmittelbar so zurückgenommen, dass die Suspension gerade in der Schwebe gehalten wird. Bei dieser Drehzahl wird 3 h gerührt. Anschließend wird der Nutschkuchen mit 3 x 125 ml Wasser, 5 x 15 ml 1 M Schwefelsäure/0,2 M Ascorbinsäure, 3 x 15 ml VE-Wasser, 5 x 15 ml 1 M NaOH, 3 x 15 ml VE-Wasser, 3 x 15 ml 1 M HCl und 3 x 15 ml VE-Wasser auf einer 125ml-Borosilicat-3.3-Fritte gewaschen. Die CHNS Analyse des getrockneten Produktes ergibt einen Schwefelgehalt von 2,2 w%.

### Beispiel 6

### Synthese eines starken Kationenaustauschers basierend auf Poly-ES/DVB Basisträger hergestellt entsprechend Beispiel 3 (intern 07MJ-PP005)

In einem 250 ml Dreihalskolben (Tropftrichter, Gaseinleitungsrohr und KPG Rührer) werden 15,55 g 2-Acrylamido-2-methyl-1-propansulfonsäure (AMPS, Merck) und 34 g VE-Wasser vorgelegt. Der Kolben wird auf 8°C abgekühlt (dabei leichter Stickstoffstrom um zu starke Luftsauerstoffanreicherung in der Lösung zu vermeiden). Dazu gibt man 3 g 32%ige Natronlauge (Merck) und stellt mit Salpetersäure (65%, Merck) einen pH Wert von 5,8 ein. Man lässt den Kolben wieder auf RT kommen und spült weiter mit Stickstoff. In diese Lösung gibt man 50 ml über Nacht Schwerkraft sedimentiertes Polymerisat hergestellt entsprechend Beispiel 3. Mit VE-Wasser wird auf ein Gesamtvolumen von 120 ml aufgefüllt. Der pH Wert wird erneut auf 5,8 eingestellt. Hierzu gibt man noch 32 µl Dodecanol. In einem Becherglas werden 6,75 g VE Wasser mit 0,725 g 65%iger Salpetersäure gemischt. In dieser Lösung werden 1,65 g Ammoniumcer(IV)-nitrat (Merck) gelöst. Die Suspension im Kolben wird auf 42°C erwärmt. Die Ammoniumcer(IV)-nitratlösung wird unter kräftigem Rühren zügig zu der Suspension zugegeben. Nach der Zugabe der Ammoniumcer(IV)-nitratlösung wird die Rührergeschwindigkeit unmittelbar so zurückgenommen, dass die Suspension gerade in der Schwebe gehalten wird. Bei dieser Drehzahl wird 4 h gerührt. Anschließend wird der Nutschkuchen mit 3 x 125 ml Wasser, 5 x 100 ml 1 M Schwefelsäure/0,2 M Ascorbinsäure, 3 x 100 ml VE-Wasser, 5 x 100 ml 1 M NaOH, 3 x 100 ml VE-Wasser, 3 x 100 ml 1 M HCl und 3 x 100 ml VE-Wasser auf einer 125ml-Borosilicat-3.3-Fritte gewaschen. Die CHNS Analyse des getrockneten Produktes ergibt einen Schwefelgehalt von 2,8 w%.

### Beispiel 7

### Statische Protein Bindungskapazität eines starken Ionenaustauschers, hergestellt entsprechend der Beschreibung aus Beispiel 4

Zur Bestimmung der statischen Protein Bindungskapazität wird der starke Ionenaustauscher, hergestellt entsprechend dem Beispiel 4, mit einem Puffergemisch, bestehend aus 25 mM Phosphat und 25 mM Acetat, eingestellt auf einen pH Wert von 5,0, gewaschen. 100 µl Gel werden mit 1 ml einer Lösung von 12,5 mg/ml Lysozym in 25 mM Phosphat und 25 mM Acetat, pH 5,0, beladen und für 120 min auf einem Schüttler inkubiert. Hiernach wird das Gel mit einem Puffergemisch aus 25 mM Phosphat und 25 mM Acetat, eingestellt auf pH 5,0, gewaschen, um nicht gebundenes Lysozym zu entfernen. An den starken Ionenaustauscher gebundenes Protein wird mit einem Puffergemisch bestehend aus 25 mM Phosphat, 25 mM Acetat und 1 M NaCl, pH 7,0, eluiert. Die Konzentration an Protein im Eluat wird mittels UV Absorption bei 254 nm bestimmt. Pro ml eingesetztem starken Ionenaustauscher ergibt sich eine Bindungskapazität von 67,3 mg Protein.

### Beispiel 8

### Statische Protein Bindungskapazität eines starken Ionenaustauschers, hergestellt entsprechend der Beschreibung aus Beispiel 5

Zur Bestimmung der statischen Protein Bindungskapazität wird der starke Ionenaustauscher, hergestellt entsprechend dem Beispiel 5, mit einem Puffergemisch, bestehend aus 25 mM Phosphat und 25 mM Acetat, eingestellt auf einen pH Wert von 5,0, gewaschen. 100 µl Gel werden mit 1 ml einer Lösung von 12,5 mg/ml Lysozym in 25 mM Phosphat und 25 mM Acetat, pH 5,0, beladen und für 120 min auf einem Schüttler inkubiert. Hiernach wird das Gel mit einem Puffergemisch aus 25 mM Phosphat und 25 mM Acetat, eingestellt auf pH 5,0, gewaschen, um nicht gebundenes Lysozym zu entfernen. An den starken Ionenaustauscher gebundenes Protein wird mit einem Puffergemisch bestehend aus 25 mM Phosphat, 25 mM Acetat und 1 M NaCl, pH 7,0, eluiert. Die Konzentration an Protein im Eluat wird mittels UV Absorption bei 254 nm bestimmt. Pro ml eingesetztem starken Ionenaustauscher ergibt sich eine Bindungskapazität von 67,5 mg Protein.

### Beispiel 9

### Statische Protein Bindungskapazität eines starken Ionenaustauschers, hergestellt entsprechend der Beschreibung aus Beispiel 6

Zur Bestimmung der statischen Protein Bindungskapazität wird der starke Ionenaustauscher, hergestellt entsprechend dem Beispiel 6, mit einem Puffergemisch, bestehend aus 25 mM Phosphat und 25 mM Acetat, eingestellt auf einen pH Wert von 5,0, gewaschen. 100 µl Gel werden mit 1 ml einer Lösung von 12,5 mg/ml Lysozym in 25 mM Phosphat und 25 mM Acetat, pH 5,0, beladen und für 120 min auf einem Schüttler inkubiert. Hiernach wird das Gel mit einem Puffergemisch aus 25 mM Phosphat und 25 mM Acetat, eingestellt auf pH 5,0, gewaschen, um nicht gebundenes Lysozym zu entfernen. An den starken Ionenaustauscher gebundenes Protein wird mit einem Puffergemisch bestehend aus 25 mM Phosphat, 25 mM Acetat und 1 M NaCl, pH 7,0, eluiert. Die Konzentration an Protein im Eluat wird mittels UV Absorption bei 254 nm bestimmt. Pro ml eingesetztem starken Ionenaustauscher ergibt sich eine Bindungskapazität von 57,6 mg Protein.

## Patentansprüche

1. Verfahren zur Herstellung von Chromatographiematerialien, **dadurch gekennzeichnet, dass**
organische, polymere Basismaterialien,
welche an der Oberfläche frei sind von OH-Gruppen,
in wässriger Lösung
in Gegenwart eines Ce(IV)-Katalysators
und mindestens einer anorganischen Säure, ausgewählt aus der Gruppe Salpetersäure, Schwefelsäure und Salzsäure,
pfropfpolymerisiert werden.

2. Verfahren nach einem Verfahren gemäß Anspruch 1 , **dadurch gekennzeichnet, dass** als polymeres Basismaterial ein partikelförmiges Polymer oder geformtes Polymer verwendet wird, welches hergestellt wird durch Polymerisation oder Copolymerisation von Monomeren, ausgewählt aus der Gruppe polyvinylgruppenhaltiger Monomere Divinylbenzol, Trivinylbenzol, Divinyltoluol, Divinylpyridin, Divinylnaphthalen, Ethylenglykoldimethacrylat, Polyethylenglykoldimethacrylat, Polypropylenglykoldimethacrylat, N,N-Methylen-bis-acrylamid, N,N-Divinylethylenharnstoff und N,N-Divinylpropylenharnstoff und monovinylgruppenhaltigen Monomeren wie z.B. Methylmethacrylat, Ethylmethacrylat, Propylmethacrylat, Butylmethacrylat, Methylacrylat, Ethylacrylat, Propylacrylat, Butylacrylat, N-Vinylpyrolidon, N-Methyl-N-vinylacetamid, Acrylnitril, Chlorstyrol und Aminostyrol.

3. Verfahren nach Anspruch 1 oder 2, **dadurch gekennzeichnet, dass** als Basismaterial Partikel mit einem mittleren Partikeldurchmesser im Bereich von 20 nm bis 1000 µm eingesetzt werden.

4. Verfahren nach einem oder mehreren der Ansprüche 1 bis 3, **dadurch gekennzeichnet, dass** als Basismaterial Partikel mit einer mittleren Partikeloberfläche im Bereich von 20 bis 1200 m²/g, bevorzugt mit einer Partikeloberfläche im Bereich von 100 bis 600 m²/g, verwendet werden.

5. Verfahren nach Anspruch 1 oder 2, **dadurch gekennzeichnet, dass** ein Basispolymer in Form eines monolithischen Körpers pfropfpolymerisiert wird.

6. Verfahren nach einem oder mehreren der Ansprüche 1 bis 5, **dadurch gekennzeichnet, dass** die Pfropfpolymerisation in Gegenwart von Ammoniumcer(IV)nitrat als Katalysator erfolgt.

7. Verfahren nach einem oder mehreren der Ansprüche 1 bis 6, **dadurch gekennzeichnet, dass** die Pfropfpolymerisation in einem protischen Lösungsmittel durchgeführt wird.

8. Verfahren nach einem oder mehreren der Ansprüche 1 bis 7, **dadurch gekennzeichnet, dass** als Lösungsmittel Wasser eingesetzt wird.

9. Verfahren nach einem oder mehreren der Ansprüche 1 bis 8, **dadurch gekennzeichnet, dass**
a) ein hydrophiles Monomer in Wasser gelöst wird, welches gegebenenfalls mit weiteren Monomeren gemischt wird,
b) die erhaltene Lösung mit dem Trägermaterial derart vermischt wird, dass 0,05 bis 100 mol Gesamtmonomer je Liter sedimentiertes Polymermaterial eingesetzt werden,
c) zu der erhaltenen Suspension in Mineralsäure gelöstes Cer(IV)-salz hinzugefügt wird, wodurch sich ein pH-Wert im Bereich von 0 - 5 einstellt, und
d) das Reaktionsgemisch innerhalb von einer Zeit von 0,5 bis 72 Stunden pfropfpolymerisiert wird.

10. Trennmaterialien hergestellt nach einem Verfahren gemäß einem oder mehreren der Ansprüche 1 - 9.

11. Chromatographiesäule, aufweisend ein Trennmaterial gemäß einem Anspruch 10.

12. Verwendung der Trennmaterialien nach Anspruch 10 in einer Chromatographiesäule.

13. Verwendung der Trennmaterialien nach Anspruch 10 zur Abtrennung von Biopolymeren aus flüssigen Medien.

## Claims

1. Process for the preparation of chromatography materials, **characterised in that**
organic, polymeric base materials
which are free from OH groups on the surface
are graft-polymerised
in aqueous solution
in the presence of a Ce(IV) catalyst
and at least one inorganic acid selected from the group nitric acid, sulfuric acid and hydrochloric acid.

2. Process according to Claim 1, **characterised in that** the polymeric base material used is a particulate polymer or shaped polymer which is prepared by polymerisation or copolymerisation of monomers selected from the group of the polyvinyl group-containing monomers divinylbenzene, trivinylbenzene, divinyltoluene, divinylpyridine, divinylnaphthalene, ethylene glycol dimethacrylate, polyethylene glycol dimethacrylate, polypropylene glycol dimethacrylate, N,N-methylenebisacrylamide, N,N-divinylethyleneurea and N,N-divinylpropyleneurea, and monovinyl group-containing monomers, such as, for example, methyl methacrylate, ethyl methacrylate, propyl methacrylate, butyl methacrylate, methyl acrylate, ethyl acrylate, propyl acrylate, butyl acrylate, N-vinylpyrrolidone, N-methyl-N-vinylacetamide, acrylonitrile, chlorostyrene and aminostyrene.

3. Process according to Claim 1 or 2, **characterised in that** the base material employed comprises particles having an average particle diameter in the range from 20 nm to 1000 µm.

4. Process according to one or more of Claims 1 to 3, **characterised in that** the base material used comprises particles having an average particle surface area in the range from 20 to 1200 m²/g, preferably having a particle surface area in the range from 100 to 600 m²/g.

5. Process according to Claim 1 or 2, **characterised in that** a base polymer in the form of a monolithic body is graft-polymerised.

6. Process according to one or more of Claims 1 to 5, **characterised in that** the graft polymerisation is carried out in the presence of ammonium cerium(IV) nitrate as catalyst.

7. Process according to one or more of Claims 1 to 6, **characterised in that** the graft polymerisation is carried out in a protic solvent.

8. Process according to one or more of Claims 1 to 7, **characterised in that** the solvent employed is water.

9. Process according to one or more of Claims 1 to 8, **characterised in that**
a) a hydrophilic monomer is dissolved in water, which is optionally mixed with further monomers,
b) the resultant solution is mixed with the support material in such a way that 0.05 to 100 mol of total monomer are employed per litre of sed i-mented polymer material,
c) cerium(IV) salt dissolved in mineral acid is added to the resultant suspension, causing a pH in the range 0 - 5 to become established, and
d) the reaction mixture is graft-polymerised over a period of 0.5 to 72 hours.

10. Separating materials prepared by a process according to one or more of Claims 1 - 9.

11. Chromatography column containing a separating material according to Claim 10.

12. Use of the separating materials according to Claim 10 in a chromatography column.

13. Use of the separating materials according to Claim 10 for the separation of biopolymers from liquid media.

## Revendications

1. Procédé de préparation de matériaux de chromatographie, **caractérisé en ce que**
des matériaux de base polymères organiques,
qui sont dépourvus de groupements OH à la surface sont polymérisés par greffage
en solution aqueuse
en présence d'un catalyseur à base de Ce(IV)
et d'au moins un acide inorganique choisi dans le groupe constitué par l'acide nitrique, l'acide sulfurique et l'acide chlorhydrique.

2. Procédé selon la revendication 1, **caractérisé en ce que** le matériau de base polymère utilisé est un polymère particulaire ou un polymère en forme qui est préparé par la polymérisation ou copolymérisation de monomères choisis dans le groupe constitué par les monomères à groupements polyvinyle, le divinylbenzène, le trivinylbenzène, le divinyltoluène, la divinylpyridine, le divinylnaphtalène, le diméthacrylate d'éthylène glycol, le diméthacrylate de polyéthylène glycol, le diméthacrylate de polypropylène glycol, le N,N-méthylènebisacrylamide, la N,N-divinyléthylèneurée et la N,N-divinylpropylèneurée, et les monomères à groupements monovinyle tels que par exemple le méthacrylate de méthyle, le méthacrylate d'éthyle, le méthacrylate de propyle, le méthacrylate de butyle, l'acrylate de méthyle, l'acrylate d'éthyle, l'acrylate de propyle, l'acrylate de butyle, la N-vinylpyrrolidone, le N-méthyl-N-vinylacétamide, l'acrylonitrile, le chlorostyrène et l'aminostyrène.

3. Procédé selon la revendication 1 ou 2, **caractérisé en ce que** le matériau de base employé comprend des particules ayant un diamètre moyen de particules dans la plage allant de 20 nm à 1000 µm.

4. Procédé selon une ou plusieurs parmi les revendications 1 à 3, **caractérisé en ce que** le matériau de base utilisé comprend des particules ayant une surface moyenne de particules dans la plage allant de 20 à 1200 m²/g, ayant de préférence une surface de particules dans la plage allant de 100 à 600 m²/g.

5. Procédé selon la revendication 1 ou 2, **caractérisé en ce qu'**un polymère de base sous la forme d'un corps monolithique est polymérisé par greffage.

6. Procédé selon une ou plusieurs parmi les revendications 1 à 5, **caractérisé en ce que** la polymérisation par greffage est effectuée en présence de ammonium-cérium(IV) nitrate comme catalyseur.

7. Procédé selon une ou plusieurs parmi les revendications 1 à 6, **caractérisé en ce que** la polymérisation par greffage est effectuée dans un solvant protique.

8. Procédé selon une ou plusieurs parmi les revendications 1 à 7, **caractérisé en ce que** le solvant employé est l'eau.

9. Procédé selon une ou plusieurs parmi les revendications 1 à 8, **caractérisé en ce que**
a) un monomère hydrophile est solubilisé dans de l'eau, lequel est éventuellement mélangé avec d'autres monomères,
b) la solution résultante est mélangée avec le matériau support de telle sorte que de 0,05 à 100 mol de monomère total sont employées par litre de matériau polymère sédimenté,
c) du sel de cérium(IV) solubilisé dans un acide minéral est ajouté à la suspension résultante, conduisant à l'établissement d'un pH dans la plage de 0 - 5, et
d) le mélange réactionnel est polymérisé par greffage sur une période de 0,5 à 72 heures.

10. Séparation de matériaux préparés par un procédé selon une ou plusieurs parmi les revendications 1 - 9.

11. Colonne de chromatographie contenant un matériau de séparation selon la revendication 10.

12. Utilisation des matériaux de séparation selon la revendication 10 dans une colonne de chromatographie.

13. Utilisation des matériaux de séparation selon la revendication 10 pour la séparation de biopolymères à partir de milieux liquides.
